# EUROPÄISCHE PATENTSCHRIFT

(11) **EP 0 950 555 B1**
(45) Veröffentlichungstag und Bekanntmachung des Hinweises auf die Patenterteilung: **08.08.2001**
(21) Anmeldenummer: 98101657.9
(22) Anmeldetag: 31.01.1998
(51) Int. Cl.: B60K 11/08

(54) **Dichtlippe zwischen Kraftfahrzeugkühler und Luftleitprofil**
Sealing lip between motor vehicle radiator and air duct profile
Lèvre d'étanchéité entre le radiateur d'un véhicule automotrice et le profile de guidage d'air

(43) Veröffentlichungstag der Anmeldung: 20.10.1999
(73) Patentinhaber: Ford Global Technologies, Inc., A subsidiary of Ford Motor Company, Dearborn, Michigan 48126 (US)
(72) Erfinder: Huebner, Martin Erich, 50765 Koeln (DE); Oltmanns, Oltmann, 53332 Bernheim (DE)
(74) Vertreter: Messulam, Alec Moses

(56) Entgegenhaltungen:
- DE-A- 2 420 615
- DE-A- 19 527 442
- US-A- 4 940 264
- US-A- 5 143 516

## Beschreibung

Die Erfindung betrifft eine Dichtlippe zwischen dem Kühler eines Kraftfahrzeuges und einem Luftleitprofil.

Die Anordnung des Luftleitprofils hat die Funktion, zusammen mit der Dichtlippe den auf den Kühler gerichteten Luftstrom möglichst vollständig, also ohne durch Undichtigkeiten entweichende Nebenluft, auf den Kühler hinzuführen.

Die erfindungsgemäße Dichtlippe ist in sogenannter 2-K-Technologie ausgeführt. Dabei wird das relativ steife Profil im Spritzgußverfahren mit der weicheren flexiblen Dichtlippe verbunden. Als Profil kann z.B. Polypropylen verwendet werden, welches durch Ersatzstoffe (z.B. Holz, Glasfaser) verstärkt sein kann. Für die Dichtlippe wird ein flexibler Kunststoff verwendet.

Erfindungsgemäß weist die Dichtlippe einen etwa T-förmigen Querschnitt auf, wobei das Dach des T-förmigen Querschnittes an einem Ende mit dem Luftleitprofil verbunden ist und der davon abgewandte etwa L-förmige Teil des T-förmigen Querschnittes mit einem ersten Schenkel des L's etwa parallel zur Fahrtrichtung verläuft und gegen eine zur Fahrzeugmittellinie gewandte entsprechend verlaufende Fläche des Kühlers anliegt. Die anströmende Luft drückt die Dichtlippe gegen die Fläche des Kühlers, so daß die Dichtwirkung selbstverstärkend ausgeführt ist. Der zweite Schenkel des L's dient der Versteifung der Dichtlippe.

Insbesondere ist der zweite Schenkel des L's etwa senkrecht zur Fahrtrichtung ausgerichtet und liegt gegen eine entsprechend verlaufende Fläche des Kühlers an. Hierdurch wird die Dichtfläche vergrößert und ein Umschlagen der Dichtlippe verhindert.

Insbesondere ist der zweite Schenkel des L's auf der von der Mittellinie des Fahrzeuges abgewandten Seite des Luftleitprofils angeordnet. Hierdurch wird verhindert, daß die am Luftleitprofil auf der von der Fahrzeugmittellinie abgewandten Seite anströmenden Luft die Dichtlippe vom Kühler abhebt, weil der zweite Abschnitt des L's selbstverstärkend gegen den Kühler gepreßt wird.

Anhand des schematisch dargestellten Ausführungsbeispiels wird die Erfindung näher erläutert. Dargestellt ist das in Fahrtrichtung links der Mittellinie angeordnete Luftleitprofil. Rechts der Mittellinie ist ein im wesentlichen spiegelbildliches weiteres Luftleitprofil angeordnet.

Die Dichtlippe 1 und das Profil 2 sind in 2-K-Technologie verbunden. Die Dichtlippe 1 weist einen etwa T-förmigen Querschnitt auf. Ein Ende 3 des Daches des T-förmigen Querschnittes geht in die Verbindung mit dem Profil 2 über. Der davon abgewandte etwa L-förmige Teil 4 des T-förmigen Querschnittes verläuft mit dem ersten Schenkel 5 des L's 4 etwa parallel zur Fahrtrichtung F (x/z-Ebene) und liegt gegen eine zur Fahrzeugmittellinie M gewandte entsprechend verlaufende Fläche 6 des Kühlers 7 an.

Der zweite Schenkel 8 des L's 4 verläuft etwa senkrecht zur Fahrtrichtung F (y/z-Ebene) und liegt gegen eine entsprechend verlaufende Fläche 9 des Kühlers 7 an.

Der zweite Schenkel 8 des L's 4 ist auf der von der Mittellinie M des Fahrzeuges abgewandten Seite des Profils 1 angeordnet. Der Abschnitt 3 der Dichtlippe kann leicht S-förmig gebogen ausgeführt werden, um Toleranzen besser aufzufangen. Außerdem kann dadurch das Dichtprofil besser zurückfahren, denn es kann einfedern, ohne sich einzurollen. Dies ist besonders wichtig, wenn der Kühler entlang der Dichtlippe bei der Montage verschoben wird. Wenn bei der Montage der Kühler zusammen mit dem Motor vertikal von unten in die Karosserie mit daran montiertem Luftleitprofil einschließlich Dichtlippe eingeschoben wird, weichen Profil und Dichtlippe bevorzugt zur Fahrzeugmittellinie im unteren Bereich zurück (keilförmige Führung zwischen linkem und rechtem Luftleitprofil). In moniertem Zustand liegt im oberen Bereich (zur Motorhaube hin) die Kante 10 zwischen den Flächen 9 und 6 des Kühlers dichtend gegen den Fußpunkt der Flächen 5 und 6 der Dichtlippe 1 an.

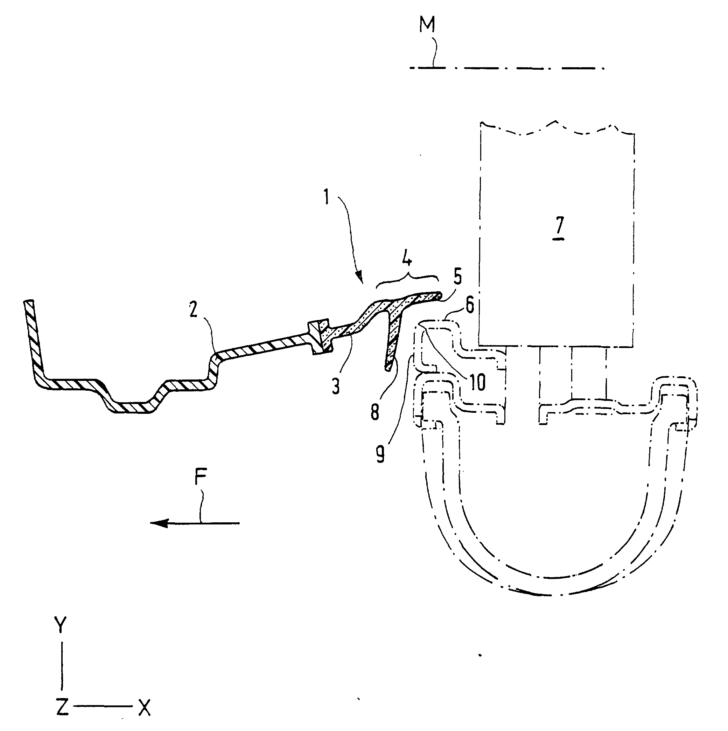

## Patentansprüche

1. Dichtlippe zwischen Kraftfahrzeugkühler und Luftleitprofil, wobei Lippe (1) und Profil (2) in 2-K-Technologie verbunden sind, dadurch gekennzeichnet, daß die Dichtlippe (1) einen etwa T-förmigen Querschnitt aufweist und an einem Ende (3) des Daches des T-förmigen Querschnittes mit dem Profil (2) verbunden ist und der davon abgewandte etwa L-förmige Teil (4) des T-förmigen Querschnittes mit dem ersten Schenkel (5) des L's (4) etwa parallel zur Fahrtrichtung (F) verläuft und gegen eine zur Fahrzeugmittellinie (M) gewandte entsprechend verlaufende Fläche (6) des Kühlers (7) anliegt.

2. Dichtlippe nach Anspruch 1, dadurch gekennzeichnet, daß der zweite Schenkel (8) des L's (4) etwa senkrecht zur Fahrtrichtung (F) verläuft und gegen eine entsprechend verlaufende Fläche (9) des Kühlers (7) anliegt.

3. Dichtlippe nach Anspruch 2, dadurch gekennzeichnet, daß der zweite Schenkel (8) des L's (4) auf der von der Mittellinie (M) des Fahrzeuges abgewandten Seite des Profils (1) angeordnet ist.

## Claims

1. Sealing lip between vehicle cooler and air guiding profile, whereby lip (1) and profile (2) are connected in 2-K technology, characterised in that the sealing lip (1) has an approximately T-shaped cross-section and on one end (3) of the roof of the T-shaped cross-section is connected with the profile (2) and the turned away approximately L-shaped part (4) of the T-shaped cross-section with the first side (5) of the L (4) runs approximately parallel to the journey direction (F) and lies against a correspondingly running area of (6) of the cooler (7) turned to the vehicle middle line (M).

2. Sealing lip according to Claim 1 characterised in that the second side (8) of the L (4) runs approximately perpendicularly to the journey direction (F) and lies against a correspondingly running area (9) of the cooler (7).

3. Sealing lip according to Claim 2 characterised in that the second side (8) of the L (4) is positioned on the side of the profile (1) turned away from the middle line (M) of the vehicle.

## Revendications

1. Lèvre d'étanchéité entre le radiateur d'un véhicule automobile et le profilé de guidage de l'air, sachant que la lèvre (1) et le profilé (2) sont assemblés selon la technologie des deux composants, caractérisée en ce que la lèvre d'étanchéité (1) présente une section transversale approximativement en forme de T et est reliée au profilé (2) par une extrémité (3) du toit de la section transversale en T, et en ce que la partie (4) approximativement en forme de L de la section transversale en T, qui est éloignée de ladite extrémité et qui comprend la première branche (5) du L (4), s'étend approximativement parallèlement à la direction d'avancement (F) et est appliquée contre une surface (6) du radiateur (7) qui présente un tracé correspondant et qui est tournée vers la ligne médiane du véhicule (M).

2. Lèvre d'étanchéité selon la revendication 1, caractérisée en ce que la seconde branche (8) du L (4) s'étend approximativement perpendiculairement à la direction d'avancement (F) et est appliquée contre une surface (9) du radiateur (7) ayant un tracé correspondant.

3. Lèvre d'étanchéité selon la revendication 2, caractérisée en ce que la seconde branche (8) du L (4) est disposée sur le côté du profilé (1) qui est éloigné de la ligne médiane (M) du véhicule.
